(19) Europäisches Patentamt
European Patent Office
Office européen des brevets

(11) **EP 2 158 565 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **08758930.5**

(22) Anmeldetag: **02.06.2008**

(51) Int Cl.:
*G06K 19/077* (2006.01)   *G06K 19/06* (2006.01)
*G06K 19/08* (2006.01)

(86) Internationale Anmeldenummer:
**PCT/EP2008/004361**

(87) Internationale Veröffentlichungsnummer:
**WO 2008/151738 (18.12.2008 Gazette 2008/51)**

(54) **MEHRSCHICHTIGES FOLIENELEMENT**

MULTI-LAYERED FILM ELEMENT

ÉLÉMENT EN FEUILLE MULTICOUCHES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.06.2007 DE 102007027838**

(43) Veröffentlichungstag der Anmeldung:
**03.03.2010 Patentblatt 2010/09**

(73) Patentinhaber: **Leonhard Kurz Stiftung & Co. KG 90763 Fürth (DE)**

(72) Erfinder: **PETERS, John, Anthony.
CH-8804 Au (CH)**

(74) Vertreter: **Zinsinger, Norbert
Louis - Pöhlau - Lohrentz
Postfach 30 55
90014 Nürnberg (DE)**

(56) Entgegenhaltungen:
**EP-A- 1 365 451        EP-A- 1 748 382
WO-A-2006/061171    US-A1- 2006 053 286**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein mehrschichtiges Folienelement mit mindestens einer flexiblen dielektrischen Schicht und mit einer oder mehreren elektrisch leitfähigen Schichten, jeweils bestehend aus einem elektrisch leitfähigen Material, sowie ein Verfahren zur Herstellung eines solchen Folienelements.

Aus DE 196 01 358 C2 ist beispielsweise ein Sicherheitsdokument bekannt, bei dem in die Papiermasse einer Banknote ein Chip eingebracht ist, welcher mit einer Antenne versehen ist. Aus Gründen der mechanischen Stabilität wird der Chip hierbei auf einen Träger laminiert, bei dem es sich um eine Metallfolie handeln kann.

Weiter wird in EP 1 179 811 A1 beschrieben, auf den Papierträger einer Banknote mittels einer Kleberschicht ein Sicherheitselement zu befestigten, welches eine Substratschicht und eine Metallschicht aufweist. Die Metallschicht bildet hierbei eine schleifenförmige Antenne aus, welche mit einer integrierten Schaltung verbunden ist. Mittels dieser Anordnung können dann in der integrierten Schaltung gespeicherte Daten ausgelesen werden.

Aus US2006/0053286 A1 ist ein mehrschichtiges Folienelement mit mindestens einer flexiblen dielektrischen Schicht und einer optisch aktiven Schicht, beispielsweise einem Hologramm, bekannt. Ferner weist das Folienelement eine Schicht mit Leiterstrukturen auf, die eine Antenne bilden welche mit einer elektrischen Schaltung verbunden ist. Der Erfindung liegt nun die Aufgabe zugrunde, ein kostengünstig zu fertigendes mehrschichtiges Folienelement bereitzustellen, aus dem berührungslos mittels elektromagnetischer Wellen eine Information ausgelesen werden kann.

Diese Aufgabe wird von einem mehrschichtigen Folienelement gemäß Patentanspruch 1 gelöst. Der Erfindung liegt hierbei die Erkenntnis zugrunde, dass es einerseits zur kostengünstigen Fertigung eines solchen Folienelements erforderlich ist, die elektrisch leitfähigen Schichten möglichst in einer Schichtdicke vorzusehen, die eine kostengünstige Strukturierung dieser Schichten ermöglicht, andererseits jedoch eine Minimierung des möglichen Leseabstandes, der durch die Verschlechterung des Qualitätsfaktors aufgrund der geringen Schichtdicke der leitfähigen Schicht bewirkt wird, durch einen Aufbau der Antennenstruktur aus zwei oder mehr miteinander gekoppelten Leitstrukturen zu kompensieren. Durch die Erfindung wird so der Vorteil erzielt, kostengünstig und in einem Rolle-zu-Rolle-Verfahren Folienelemente fertigen zu können, aus denen berührungslos mittels elektromagnetischer Wellen auch bei einem größeren Leseabstand Informationen auslesbar sind. Vorzugsweise beträgt die Schichtdicke der elektrisch leitfähigen Schicht weniger als 12 $\mu$m. Weiter ist es durch den Einsatz der Erfindung auch möglich, elektrisch leitfähige Schichten einer Schichtdicke von weniger als 1 $\mu$m zu verwenden, die beispielsweise durch Vakuumbedampfen oder Sputtern hergestellt sind.

Vorteilhafte Ausgestaltungen der Erfindung sind in den Unteransprüchen bezeichnet.

Gemäss einer bevorzugten Ausführungsform der Erfindung sind die zwei oder mehr Leiterstrukturen in zwei oder mehr unterschiedlichen leitfähigen Schichten ausgeformt. So umfasst das mehrschichtige Folienelement beispielsweise zwei elektrisch leitfähige Schichten, wobei in der ersten elektrisch leitfähigen Schicht eine erste Leiterstruktur und in der zweiten elektrisch leitfähigen Schicht eine zweite Leiterstruktur ausgeformt ist. Weiter ist es auch möglich, dass das mehrschichtige Folienelement drei oder mehr elektrisch leitfähige Schichten umfasst, in denen jeweils eine oder mehrere Leiterstrukturen ausgeformt sind, wobei die Leiterstrukturen der drei oder mehr Schichten sodann miteinander zu der Antennenstruktur gekoppelt sind, welche galvanisch mit der elektrischen Schaltung verbunden ist. Hierdurch wird es möglich, im selben Flächenbereich eine dreidimensionale, vorzugsweise in mehreren Lagen ausgebildete Antennenstruktur vorzusehen und so den Qualitätsfaktor der Antennenstruktur zu verbessern. Im einfachsten Fall sind hierbei eine erste und eine zweite, durch die dielektrische Schicht voneinander getrennte planare Leiterstrukturen über eine elektrisch leitfähige Durchkontaktierung miteinander gekoppelt. Bei den ersten und zweiten Leiterstrukturen handelt es sich hierbei vorzugsweise um spulenförmige Strukturen, die jeweils eine spulenförmig angeordnete Leiterbahn umfassen.

Die Resonanzfrequenz einer Antennenstruktur welche galvanisch mit einer elektrischen Schaltung verbunden ist, ist durch die Gleichung:

$$f_o = (2\pi)^{-1} \cdot (L\,C)^{-0.5}$$

wobei

L     die Induktivität, vorzugsweise gemessen in Mikro-Henry,

C     die Gesamtkapazität, vorzugsweise gemessen in Pico-Farad

und

$f_o$     die Resonanzfrequenz, vorzugsweise gemessen in Mega-Hertz

ist.

Die Gesamtkapazität C der Antennenstruktur und der elektrischen Schaltung (IC) bestimmt sich aus folgender Gleichung:

$$C = C_{IC} + C_{con} + C_c$$

Hierbei stellt

$C_{IC}$ die Eingangskapazität der elektrischen Schaltung,

$C_{con}$ die Verbindungskapazität zwischen der elektrischen Schaltung und der Antennenstruktur (üblicherweise 0,5 bis 2 pF)

und

$C_c$ die Zwischen-Windungskapazität zwischen den Windungen der einzelnen spulenförmigen Strukturen (üblicherweise 2 bis 4 pF), die Kapazität zwischen den Leiterstrukturen, die durch die Kopplung der Leiterstruktur bedingte Kapazität und die durch die dielektrische Schicht bedingte Kapazität dar.

Der Qualitätsfaktor Q der Antennenstruktur und der elektrischen Schaltung (IC) in einer Parallelschaltung bestimmt die minimale magnetische Feldstärke H, welche erforderlich ist, um die elektrische Schaltung zu aktivieren und eine Information auszulesen und bestimmt ebenfalls den maximalen Leseabstands-Faktor D, der den maximalen Leseabstand bestimmt, aus dem die Information aus dem Folienelement auslesbar ist.

Der Qualitätsfaktor Q der Antennenstruktur und der elektrischen Schaltung (IC) in einer Parallelschaltung wird hierbei wie folgt bestimmt:

$$Q = R_p .(C/L)^{0.5}$$

Hierbei stellt $R_p$ den Widerstand der Antennenstruktur und der elektrischen Schaltung (IC) in einer Parallelschaltung dar, wobei

$$R_p = (R_{pc} . R_{IC})/( R_{pc} + R_{IC}),$$

und

$R_{pc} = R_c.(1 + Qs^2)$. Hierbei stellt $R_c$ den Widerstand und $Q_s$ den Qualitätsfaktor der Antennenstruktur dar.

Der Qualitätsfaktor der Antennestruktur wird hierbei wie folgt bestimmt:

$$Q_s = 2\pi f_o L / R_c$$

Bei einer einfachen, aus einer spulenförmigen Struktur aufgebauten Antennenstruktur ergeben sich weiter folgende Zusammenhänge:

$$H = (L.V_{IC}) . (\mu_0.N.S.R_p)^{-1};$$

und

$$D = Q.N.S \times 10^{-3}$$

Hierbei stellt $V_{IC}$ die Schwellspannung dar, die erforderlich ist, um die elektrische Schaltung zu aktivieren; $\mu_o$ ist die magnetische PermeabilitätsKonstante; N die Anzahl der Windungen der spulenförmigen Struktur und S ist die mittlere Fläche, die die spulenförmige Struktur umschließt.

Weiter beeinflussen sich diese Größen gegenseitig. So führt eine Erhöhung der Anzahl der Windungen N bei Beibehaltung der mittleren Fläche S bei den hier vorgesehenen sehr dünnen Metallschichten zu einer sehr starken Erhöhung des Widerstands $R_c$, welche ebenso auftritt, falls die Fläche S vergrößert wird. Dies führt bei den gegebenen Rahmenbedingungen dazu, dass ein ausreichender Qualitätsfaktor Q unter Verwendung von kostengünstigen Strukturierungsmethoden für metallische Schichten durch eine einzelne spulenförmige Struktur nicht mehr realisiert werden kann. Gemäß dem hier beschriebenen bevorzugten Ausführungsbeispiel der Erfindung ist es jedoch möglich: So wird die Kapazität $C_c$ zusätzlich von der Überlappung der leitfähigen Strukturen der ersten und zweiten Schicht bestimmt.

Diese Kapazität $C_o$ kann näherungsweise wie folgt bestimmt werden:

$$C_o = \kappa.\varepsilon_o. A / d_s$$

Hierbei ist $\kappa$ die Dielektrizitätskonstante, näherungsweise 2,1 bis 2,3 für eine aus einem polymeren Material bestehenden dielektrische Schicht, $\varepsilon_o$ die Permeabilitätskonstante, etwa $8,9 \times 10^{-12}$ Farad/Meter, A die Fläche, in der die erste und zweite Leiterstruktur in Überlappung zueinander angeordnet sind und $d_s$ der Abstand zwischen der ersten und der zweiten elektrisch leitfähigen Schicht, der in vielen Anwendungsfällen der Schichtdicke der dielektrischen Schicht entspricht. Je nach Übertappungs-Faktor wird die Kapazität $C_c$ so wesentlich von der Kapazität $C_o$ bestimmt.

Durch die Erfindung wird so ein neuer Freiheitsgrad, nämlich die Anordnung der Leiterstrukturen zueinander und die Kopplung der Leiterstrukturen untereinander geschaffen, welcher es ermöglicht, einen hohen Qualitätsfaktor trotz Verwendung kostengünstiger Strukturierungsverfahren für die elektrisch leitfähigen Schichten zu erzielen.

So werden bei einem ersten Ausführungsbeispiel der Erfindung die erste und die zweite Leiterstruktur jeweils von einer spulenförmigen Struktur gebildet und mittels einer elektrisch leitfähigen Durchkontaktierung in Form einer Serienschaltung miteinander gekoppelt. Bei dieser Kopplung wird zwar der Widerstand $R_c$ erhöht, es ergibt sich andererseits jedoch eine durch die oben beschriebenen Faktoren bedingte erhebliche Erhöhung der Kapazität C und der Induktivität L in Vergleich zu einer einzigen spulenförmigen Anordnung, welche zusammen mit einer Verringerung des Widerstands Rp zu einer Erhöhung des gesamt Qualitätsfaktor Q verwendet werden kann. Weiter ist es auch möglich, weitere Verbesserungen durch Erhöhung der Anzahl der elektrisch leitfähigen Schichten zu erreichen und so beispielsweise drei oder mehr elektrisch leitfähige Schichten vorzusehen, die drei oder mehr spulenförmige Leiterstrukturen vorsehen, die - wie oben beschrieben - mittels jeweiliger Durchkontaktierungen miteinander in einer Serienschaltung verkoppelt sind.

Weiter ist es auch möglich, die erste und die zweite Schalterstruktur mittels Durchkontaktierungen nicht in einer Serienschaltung sondern in einer Parallelschaltung mittels zweier elektrisch leitfähiger Durchkontaktierungen miteinander zu verkoppeln. Auch hierdurch ergeben sich erhebliche Vorteile, da einerseits hierdurch der Widerstand $R_c$ gesenkt und anderseits die Kapazität/ Induktivität der Leiterstruktur positiv beeinflusst werden kann. Dies wird an späterer Stelle noch detailliert erläutert.

Gemäß eines weiteren bevorzugten Ausführungsbeispiels der Erfindung ist eine dritte Leiterstruktur in der ersten leitfähigen Schicht ausgeformt und eine erste Elektrode der elektrischen Schaltung mit der ersten Leiterstruktur und eine zweite Elektrode der elektrischen Schaltung mit der dritten Leiterstruktur galvanisch verbunden. Es werden somit zwei oder mehr Leiterstrukturen in der ersten elektrisch leitfähigen Schicht abgeformt, die mit ein oder mehreren weiteren Leiterstrukturen gekoppelt sind, die in der zweiten elektrisch leitfähigen Schicht ausgeformt sind. Durch die sich hierdurch ergebenden neuen Freiheitsgrade wird neben dem Möglichwerden weiterer Verbesserungen des Qualitätsfaktors auch eine kostengünstige Montage der elektrischen Schaltung in und auf dem Folienelement ermöglicht und vermieden, isolierte Brücken für einen Anschluss der elektronischen Schaltung einsetzen zu müssen. So ist es besonders vorteilhaft, die erste, zweite und dritte Leiterstruktur jeweils in Form einer spulenförmigen Struktur auszubilden, wobei die erste Leiterstruktur und die zweite Leiterstruktur mit der dritten Leiterstruktur jeweils galvanisch über eine Durchkontaktierung und/oder induktiv/kapazitiv gekoppelt sind. Bevorzugt ist hierbei, ein Ende der ersten Leiterstruktur galvanisch über eine Durchkontaktierung mit einem Ende der zweiten Leiterstruktur und ein Ende der dritten Leiterstruktur galvanisch über eine Durchkontaktierung mit dem anderen Ende einer zweiten Leiterstruktur zu verbinden, wodurch sich eine Antennenstruktur mit hohem Qualitätsfaktor und eine effektive und kostengünstige Ankopplung der elektronischen Schaltung ergibt.

Gemäss einem weiteren bevorzugten Ausführungsbeispiel der Erfindung ist die elektrische Schaltung galvanisch mit der ersten Leiterstruktur, nicht jedoch mit der zweiten Leiterstruktur verbunden. Die erste und die zweite Leiterstruktur sind so galvanisch voneinander getrennt und kapazitiv und/oder induktiv miteinander gekoppelt. Hierbei ist es möglich, dass die erste und die zweite Leiterstruktur jeweils als spulenförmige Strukturen ausgeformt sind und durch entsprechende Wahl der Überdeckungsbereiche (sh. oben) oder über spezielle Kondensatorplatten miteinander gekoppelt sind. Weiter ist es auch möglich, dass die erste Leiterstruktur und die zweite Leiterstruktur insbesondere bei diesem Ausführungsbeispiel der Erfindung von zwei unterschiedlichen Antennenstrukturen gebildet werden, es sich so beispielsweise bei der ersten Leiterstruktur um eine Antennenspule und bei der zweiten Leiterstruktur um eine Dipolantenne, Bipol-Antenne oder Schlitzantenne handelt. So kann vorgesehen sein, dass eine erste Leiterstruktur zur Einkopplung des Nahfeldes ausgelegt ist, es sich beispielsweise hierbei um eine Antennenspule oder Dipolantenne handelt, und die zweite Leiterstruktur von einer Antennenstruktur gebildet wird, die zur Einkopplung des Fernfeldes ausgelegt ist, es sich so beispielsweise hier um eine Bipol-Antenne handelt.

Gemäss eines weiteren Ausführungsbeispiels der Erfindung ist vorgesehen, dass eine erste Elektrode der elektrischen Schaltung mit der ersten Leiterstruktur und eine zweite Elektrode der elektrischen Schaltung mit der zweiten Leiterstruktur galvanisch verbunden ist und dass die erste Leiterstruktur ansonsten nicht galvanisch mit der zweiten Leiterstruktur verbunden ist. Es sind so in zwei zueinander parallel versetzte Ebenen zwei vorzugsweise unterschiedliche ausgebildete Leiterstrukturen vorgesehen, die eine effektivere Einkopplung des Fernfeldes ermöglichen.

Gemäss eines weiteren bevorzugten Ausführungsbeispiels der Erfindung werden die zwei oder mehr Leiterstrukturen jeweils von einer Leiterbahn mit einem ersten Ende und einem zweiten Ende gebildet, wobei die ersten Enden der Leiterstrukturen mit einer ersten Elektrode der elektrischen Schaltung und die zweiten Enden der Leiterstrukturen mit einer zweiten Elektrode der elektrischen Schaltung verbunden sind. Die Antennenstruktur wird so von zwei oder mehr in Parallelschaltung verbundenen Leiterstrukturen gebildet.

Hierdurch wird zum einen erreicht, dass der Widerstand $R_c$ verringert wird. Im Weiteren ist es so auch möglich, die Kapazität $C_c$ durch entsprechende Anordnung der Leiterstrukturen zueinander zu beeinflussen, wie dies oben bereits für den Fall der Anordnung der Leiterstrukturen in unterschiedlichen Ebenen beschrieben worden ist. Durch diese vorteilhafte Fortbildung der Erfindung ist so eine deutliche Erhöhung des Qualitätsfaktors, insbesondere durch die hierdurch erzielte Verringerung des Widerstands $R_c$ erzielbar.

Als vorteilhaft hat es sich weiter erwiesen, eine optisch aktive Schicht in dem Folienelement vorzusehen und hierbei die elektrisch leitfähige Schicht bzw. die elektrisch leitfähigen Schichten als Reflexionsschicht zu verwenden, die mit der optisch aktiven Schicht zusammenwirkt. Als optisch aktive Schicht werden insbesondere Schichten mit einem mikroskopischen oder makroskopischen Oberflächenrelief, Dünnfilmschichten, Flüssigkristallschichten und Schichten mit optisch aktiven Pigmenten eingesetzt. Weiter ist es möglich, dass die optisch aktive Schicht eine optisch auslesbare Codierung enthält, welche beispielsweise die in der elektronischen Schaltung gespeicherte Information wiedergibt oder mit diesen Information in Beziehung steht, beispielsweise als öffentlicher Schlüssel für die Decodierung der in der elektronischen Schaltung gespeicherten Informationen dient.

Gemäss eines weiteren bevorzugten Ausführungsbeispiels der Erfindung wird mindestens eine der elektrisch leitfähigen Schichten von einer Schicht einer Übertragungslage einer Transferfolie gebildet, die mittels einer Kleberschicht mit der dielektrischen Schicht verbunden ist. Hierdurch ist es möglich, das Folienelement besonders kostengünstig aufzubauen: Die elektrisch leitfähigen Schichten werden in bereits vorstrukturierter Form in der Übertragungslage einer Transferfolie vorgesehen und dann auf die dielektrische Schicht mittels eines Kalt- oder Heißprägevorgangs appliziert. Weiter ist es auch möglich, dass die elektrisch leitfähige Schicht in einer derartigen Transferfolie vollflächig vorgesehen ist und die Strukturierung der elektrisch leitfähigen Schicht bei der Applizierung der Übertragungslage der Transferfolie auf die dielektrische Schicht, beispielsweise durch einen entsprechend ausgeformten Prägestempel oder eine entsprechende andersartige, bereichsweise Aktivierung der Kleberschicht der Transferfolie erfolgt. Weiter ist es möglich, dass die dielektrische Schicht selbst von einer Kleberschicht gebildet wird und/oder die in der dielektrischen Schicht vorzusehenden Durchkontaktierungen von einem elektrisch leitfähigen Kleber gebildet werden. Hierdurch lassen sich weitere Kosteneinsparungen erreichen und können weitere Prozessschritte eingespart werden, so dass die Herstellung weiter verbilligt wird.

Das Folienelement kann weiter seinerseits als Transferfolie, insbesondere als Heißprägefolie ausgebildet sein und verfügt in diesem Fall über eine Trägerfolie und eine von dieser durch eine Ablöseschicht getrennte Übertragungslage. Die dielektrische Schicht und die elektrisch leitfähige Schicht bzw. Schichten sind hierbei Teil der Übertragungslage. Die Schichtdicke der dielektrischen Schicht beträgt hier vorzugsweise weniger als 3 µm und die Gesamtdicke der Übertragungslage besitzt vorzugsweise eine Schichtdicke von weniger als 20 µm.

Das Folienelement kann jedoch weiter auch als Laminierfolie ausgebildet sein. In diesem Fall beträgt die Schichtdicke der dielektrischen Schicht bevorzugt zwischen 12 und 42 µm.

Die leitfähige Schicht besitzt bevorzugt eine Schichtdicke von weniger als 12 µm, bevorzugt weniger als 5 µm.

Weiter beträgt die von den zwei oder mehr Leiterstrukturen bedeckte Fläche weniger als 90 x 50 mm². Die zwei oder mehr Leiterstrukturen sind hierbei bevorzugt lediglich in den Randbereichen der von den Leiterstrukturen aufgespannten Fläche vorgesehen, vorzugsweise lediglich in einem weniger als 4 mm breiten Streifen angeordnet, der an den Randbereich der aufgespannten Fläche anschließt.

Weiter ist es vorteilhaft, das erfindungsgemäße Folienelement wie folgt herzustellen:
Auf einer dielektrischen Schicht, bei der es sich auch um einen mehrschichtigen Körper handeln kann, wird die elektrisch leitfähige Schicht bereits in strukturierter Form aufgebracht oder vollflächig aufgebracht und anschliessend beispielsweise durch Positiv-/Negativ-Ätzen, Laser-Ablation oder mechanische Ablation strukturiert. Die elektrisch leitfähige Schicht wird hierbei so strukturiert, dass auf der Oberfläche der dielektrischen Schicht zwei oder mehr Leiterstrukturen vorgesehen sind, die jeweils eine Antennenstruktur ausbilden. Vorzugsweise werden diese Leiterstrukturen dann noch mittels nicht in dieser Schichtebene liegenden Verbindungselementen miteinander elektrisch leitend verbunden. Anschliessend wird der sich so ergebende Folienkörper entlang eine Faltlinie gefaltet, und zwar so, dass Bereiche der Oberfläche der dielektrischen Schicht, die nicht mit der elektrisch leitfähigen Schicht versehen sind, in Berührung stehen. Anschliessend werden die in Berührung stehenden Bereiche der dielektrischen Schicht mit einander verklebt, so dass sich ein Folienkörper ergibt, der auf der einen Seite mit der einen Antennenstruktur und auf der anderen Seite mit der anderen Antennenstruktur versehen ist.

Im Weiteren wird die Erfindung anhand von mehreren Ausführungsbeispielen unter Zuhilfenahme der beiliegenden Zeichnungen beispielhaft erläutert.

| | |
|---|---|
| Fig. 1 a | zeigt eine schematisierte Schnittdarstellung eines erfindungsgemässen Folienelements für ein erstes Ausführungsbeispiel der Erfindung. |
| Fig. 1b | zeigt eine Schnittdarstellung eines Sicherheitsdokuments mit einem Folienelement nach Fig. 1a. |
| Fig. 2 | zeigt eine schematisierte Schnittdarstellung eines erfindungsgemässen Folienelements gemäß eines weiteren Ausführungsbeispiels der Erfindung. |
| Fig. 3a | zeigt eine schematisierte Darstellung eines erfindungsgemässen Folienelements gemäß eines weiteren Ausführungsbeispiels der Erfindung. |
| Fig. 3b | zeigt eine schematisierte Darstellung eines erfindungsgemässen Folienelements für ein weiteres Ausführungsbeispiel der Erfindung. |
| Fig. 4 | zeigt eine schematisierte Darstellung eines nicht erfindungsgemässen Folienelements . |
| Fig. 5 | zeigt eine schematisierte Schnittdarstellung eines erfindungsgemässen Folienelements für ein weiteres Ausführungsbeispiel der Erfindung. |
| Fig. 6 | zeigt eine schematisierte Schnittdarstellung eines erfindungsgemässen Folienelements für ein weiteres Ausführungsbeispiel der Erfindung. |
| Fig. 7a | zeigt eine schematisierte Darstellung eines erfindungsgemässen Folienelements für ein weiteres Ausführungsbeispiel der Erfindung. |
| Fig. 7b bis Fig. 7d | zeigen schematisierte Schnittdarstellungen zur Verdeutlichung der Herstellung eines erfindungsgemässen Folienelements. |
| Fig. 7e | zeigt eine schematisierte Darstellung eines gemäss den Figuren Fig. 7b bis Fig. 7d hergestellten erfindungsgemässen Folienelements. |
| Fig. 8a und Fig. 8b | zeigen schematisierte Darstellungen zur Verdeutlichung der Herstellung eines erfindungsgemässen Folienelements für ein weiteres Ausführungsbeispiel der Erfindung. |

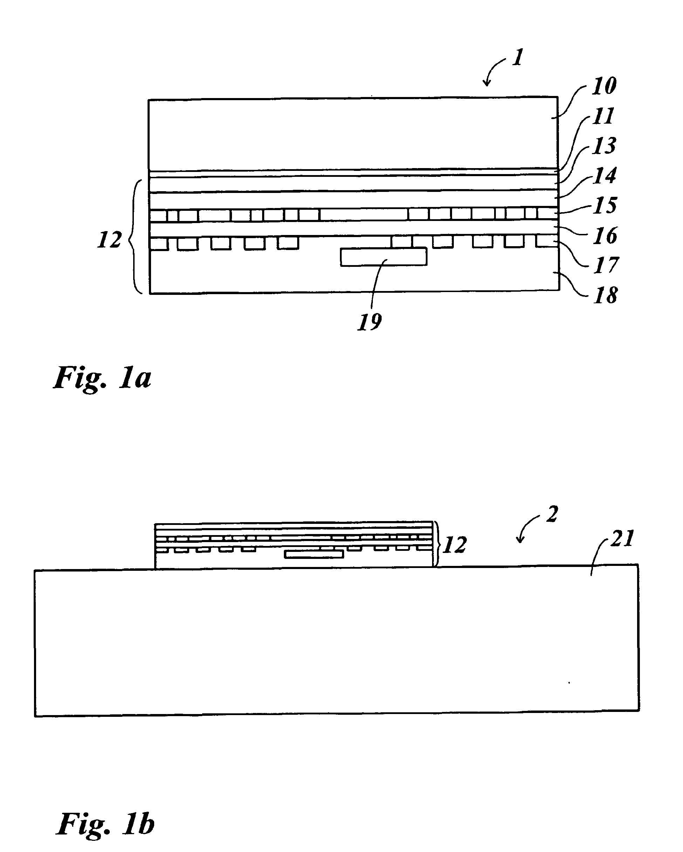

Fig. 1a zeigt eine Transferfolie 1, welche aus einer Trägerfolie 10 und einer von dieser durch eine Ablöseschicht 11 getrennten Übertragungslage 12 besteht.

Die Trägerschicht 10 wird von einer Kunststofffolie, vorzugsweise einer PET- , Polycarbonat- oder einer BOPP-Folie einer Dicke von 12 bis 42 $\mu$m gebildet. Bei der Ablöseschicht 11 handelt es sich um eine dünne, vorzugsweise wachartige Komponenten enthaltende Schicht einer Dicke von 0,5 bis 1 $\mu$m. Es ist jedoch auch möglich, auf die Ablöseschicht 11 zu verzichten.

Die Übertragungslage 12 weist eine Schutzschicht 13, eine optisch aktive Schicht 14, eine elektrisch leitfähige Schicht 15, eine dielektrische Schicht 16, eine elektrisch leitfähige Schicht 17, eine Kleberschicht 18 und eine elektrische Schaltung 19 auf.

Bei der Schutzschicht 13 handelt es sich um eine Schutzlackschicht einer Dicke von 1 bis 5 $\mu$m. Es ist jedoch auch möglich, dass es sich bei der Schutzschicht 13 um eine dünne Kunststofffolie, insbesondere um eine Polyesterfolie einer Dicke zwischen 12 und 42 $\mu$m, bevorzugt von 20 $\mu$m handelt.

Bei der optisch aktiven Schicht 14 handelt es sich um eine Schicht, die das optische Erscheinungsbild des abgeprägten Folienelements beeinflusst. Im einfachsten Fall handelt es sich bei der optisch aktiven Schicht 14 um eine bevorzugt musterförmig ausgestaltete Farblackschicht. Es ist jedoch auch möglich, dass die optisch aktive Schicht 14 ein oder mehrere optisch variable Effekte zeigt, welche als zusätzliche Sicherheitsmerkmale dienen. In diesem Fall ist die optisch aktive Schicht 14 bevorzugt mehrlagig ausgeführt.

In einem ersten Ausführungsbeispiel handelt es sich bei der optisch aktiven Schicht 14 um eine Replizierlackschicht, in die mittels UV-Replikation oder mittels eines beheizten Prägestempels ein optisch aktives Oberflächenrelief abgeformt ist, insbesondere ein diffraktives Oberflächenrelief, beispielsweise ein Hologramm, eine Mikrolinsenstruktur (Mikrolinsen mit einem Durchmesser von weniger als 300 $\mu$m, insbesondere weniger als 50 $\mu$m), eine Mattstruktur oder ein Blazegitter. Weiter ist es auch möglich, dass die optisch aktive Schicht 14 ein Dünnfilmschichtsystem aufweist, welches als Distanzschicht ein oder mehrere Schichten einer optisch wirksamen Dicke von N4 oder $\lambda$/2 aufweist, wobei $\lambda$ im Wellenlängenbereich des für den menschlichen Betrachters sichtbaren Lichtes liegt und damit ein von dem Betrachter wahrnehmbarer Farbwechseleffekt durch die optisch aktive Schicht 14 generiert wird. Weiter ist es auch möglich, dass die optisch aktive Schicht 14 eine orientierte und vernetzte Flüssigkristallschicht aufinreist, die beispielsweise in verschiedenen Bereichen unterschiedlich orientiert ist, wodurch das einfallende Licht in verschiedenen Bereichen unterschiedlich polarisiert wird. Weiter kann ein cholesterisches Flüssigkristallmaterial verwendet werden, welches aufgrund seiner helikalen Struktur ebenfalls einen blickwinkelabhängigen Farbverschiebungseffekt zeigt.

Weiter ist es auch möglich, dass die optisch aktive Schicht 14 ein Bindemittel mit optisch aktiven Pigmenten, insbesondere Effektpigmenten wie Dünnfilmschicht-Pigmenten oder Flüssigkristall-Pigmenten oder auf UV- oder IR-aktive, lumineszente Pigmente enthält.

Bei den elektrisch leitfähigen Schichten 15 und 17 handelt es sich um Schichten aus einem metallischen, elektrisch leitenden Material, beispielsweise Aluminium, Kupfer, Silber, Chrom, Gold oder einer Metalllegierung. Weiter ist es auch möglich, dass die elektrisch leitenden Schichten 15 und 17 aus einem anderen, elektrisch leitfähigen Material, beispielsweise einem elektrisch leitfähigen Polymer oder einem transparenten, elektrisch leitfähigen Material, beispielsweise ITO, bestehen.

Die Schichtdicken der elektrisch leitfähigen Schichten 15 und 17 sind vorzugsweise grösser als 0,1 $\mu$m um eine ausreichende elektrische Leitfähigkeit zu gewährleisten. So ist es beispielsweise möglich, für Antennenstrukturen, die für hohe Frequenzen (900 MHz oder UHF) ausgelegt sind, eine 100 nm dicke Aluminiumschicht zu verwenden. Untersuchungen haben gezeigt, dass eine derartige Schichtdicke bei erfindungsgemäßer Ausgestaltung des Folienelements ausreichend für die Einkopplung des Nahfeldes und/oder für Anwendungen mit kurzem Leseabstand sind. Die elektrisch leitfähigen Schichten 15 und 17 besitzen andererseits jedoch eine Dicke von weniger als 15 $\mu$m, bevorzugt weniger als 5 $\mu$m, was eine kostengünstige Strukturierung dieser Schichten ermöglicht.

Die elektrisch leitfähigen Schichten 15 und 17 sind weiter nicht als vollflächige sondern als partiell ausgeformte Schichten in der Übertragungslage 12 vorgesehen, wobei - wie in Fig. 1 angedeutet - die elektrisch leitfähige Schicht 15 musterförmig zur Bildung einer ersten Leiterstruktur ausgeformt ist und die elektrisch leitfähige Schicht 17 musterförmig zur Bildung einer zweiten Leiterstruktur ausgeformt ist. Die ersten und zweiten Leiterstrukturen werden hierbei vorzugsweise von spulenförmigen oder schleifenförmigen Strukturen gebildet. Es ist jedoch auch möglich, dass die ersten und zweiten Leiterstrukturen von andersartigen, als Antennenstrukturen verwendbaren Strukturen gebildet werden, und die elektrisch leitfähigen Schichten 15 und 17 so beispielsweise in Form einer Dipolantenne, Bipol-Antenne, Patch-Antenne, F-Antenne oder Schlitzantenne ausgeformt sind.

Bei der Herstellung der Transferfolie 1 werden beispielsweise nacheinander die Ablöseschicht 11 und die optisch aktive Schicht 13 auf die Trägerfolie 10 aufgebracht. Sodann wird anschliessend vollflächig die elektrisch leitende Schicht 15 aufgebracht, beispielsweise indem auf den so gebildeten Folienkörper eine dünne Metallschicht aufgedampft wird, oder eine Leitpaste gedruckt wird. Anschliessend wird die elektrisch leitfähige Schicht 15 partiell wieder entfernt, beispielsweise durch Positiv-/Negativätzen, Laserablation oder mittels eines Lift-Off-Verfahrens. Weiter ist es möglich, dass die Metallschicht in einem weiteren Verfahrensschritt noch galvanisch verstärkt wird. Anschliessend wird die dielektrische Schicht 16 aufgebracht, bei der es sich beispielsweise um eine dünne Lackschicht einer Schichtstärke von 1 bis 2 $\mu$m handelt. Anschliessend wird wiederum die elektrisch leitfähige Schicht 17 vollflächig aufgebracht und anschliessend durch eines der oben beschriebenen Strukturierungsverfahren wieder partiell entfernt, so dass in der elektrisch leitfähigen Schicht 17 die zweite Leiterstruktur ausgeformt ist.

Alternativ ist es auch möglich, dass eine Laminierfolie mit den Schichten 15, 16 und 17 separat gefertigt wird und anschliessend auf die optisch aktive Schicht 17 auflaminiert wird. Hierzu wird als dielektrische Schicht 16 beispielsweise eine Kunststofffolie, z.B. eine Polymerfolie einer Dicke von 12 bis 24 $\mu$m, verwendet, diese Folie beidseitig mit einer dünnen Metallschicht bedampft und anschliessend beidseitig mit einem der oben beschriebenen Strukturierungsverfahren partiell wieder entfernt, so dass die elektrisch leitfähigen Schichten 15 und 17 in Form der ersten bzw. zweiten Leiterstruktur ausgeformt sind.

Alternativ ist es weiter möglich, dass die elektrisch leitfähigen Schichten 15 und/oder 17 in einem separaten Herstellungsprozess gefertigt werden (beispielsweise Strukturierung mittels eines Stanz-/Ätzverfahrens) und anschliessend als Teil der Übertragungslage einer Transferfolie auf die optisch aktive Schicht 14 bzw. auf die dielektrische Schicht 16 auflaminiert werden. Hierbei ist es dann auch möglich, dass die dielektrische Schicht 16 von einer Kleberschicht gebildet wird, die zum Zwecke der Applizierung der elektrisch leitfähigen Schicht 17 auf den Folienkörper vorgesehen ist und somit die Schicht 16 eine entsprechende Doppelfunktion erfüllt.

Falls erforderlich, werden dann im Weiteren die in den elektrisch leitfähigen Schichten 15 und 17 ausgeformten Leiterstrukturen mittels elektrisch leitfähiger Durchkontaktierungen durch die dielektrische Schicht 16 miteinander gekoppelt. Diese Durchkontaktierungen werden bevorzugt mittels eines elektrisch leitfähigen Klebers hergestellt. Weiter ist es auch möglich, dass die dielektrische Schicht 16 nur bereichsweise auf die elektrisch leitfähige Schicht 15 aufgebracht wird und die dielektrische Schicht 16 in den Bereichen nicht vorgesehen wird, in denen Durchkontaktierungen zur Kopplung der ersten und zweiten Leiterstruktur vorgesehen sein sollen. Die galvanische Kopplung dieser Leiterstrukturen erfolgt so automatisch bei Aufbringen der elektrisch leitfähigen Schicht 17.

Bei der oben beschriebenen Alternative, bei der ein aus den Schichten 15, 16 und 17 bestehendes Schichtgebilde separat hergestellt wird, ist es weiter auch möglich, durch Aufbringung der beidseitigen Metallisierungen auf die dielektrische Schicht 16 in die dielektrische Schicht 16 Löcher beispielsweise durch Stanzen oder durch Laserablation einzubringen, so dass - insbesondere bei galvanischer Verstärkung der Metallschicht während des Herstellungsprozesses - sich automatisch im Bereich der Löcher elektrisch leitfähige Durchkontaktierungen durch die dielektrische Schicht 16 ergeben.

Im Weiteren wird sodann die elektronische Schaltung appliziert und die zweite Leiterstruktur beispielsweise mittels eines elektrisch leitfähigen Klebers mit den hierfür vorgesehenen Elektroden der elektrischen Schaltung 19 kontaktiert.

Bei der elektrischen Schaltung 19 handelt es sich vorzugsweise um eine Transceiver-Schaltung, die auf die Resonanzfrequenz der von der ersten und zweiten Leiterstruktur gebildeten Antennenstruktur abgestimmt ist. Vorzugsweise weist die elektrische Schaltung 19 hierbei keine eigenständige Energiequelle auf sondern stellt die Energieversorgung durch Gleichrichtung und Glättung der in der Antennenstruktur von der elektromagnetischen Trägerwelle eingekoppelten Spannung bereit. Die Übermittlung der in der elektrischen Schaltung 19 gespeicherten Informationen erfolgt vorzugsweise mittels Lastmodulation, wobei auf die von der Antennenstruktur rückreflektierte Trägerwelle gemäss eines vorgegebenen Codierungsschemas die gespeicherten Informationen aufmoduliert werden. Bei der elektronischen Schaltung 19 handelt es sich vorzugsweise um eine basierend auf organischer Schaltungstechnologie unter Verwendung von organischen Halbleitermaterialien aufgebaute Schaltung, die vorzugsweise ebenfalls in einem Rolle-zu-Rolle-Prozess gefertigt ist. Dabei kann es sich bei der elektrischen Schaltung 19 auch um einen herkömmlichen Silizium-Chip handeln, bei dem als Trägersubstrat ein besonders dünnes Silizium-Plättchen verwendet wird oder das Trägersubstrat vor Applizierung durch ein mechanisches Verfahren in seiner Dicke reduziert worden ist.

Anschliessend wird die Kleberschicht 18 vollflächig auf den so gebildeten Schichtkörper aufgebracht. Bei der Kleberschicht 18 handelt es sich hierbei vorzugsweise um einen thermisch aktivierbaren Kleber. Es ist jedoch auch möglich, dass die Kleberschicht 18 aus einem Kaltkleber oder aus einem UVaktivierbaren Kleber besteht.

Fig. 1 b zeigt ein Sicherheitsdokument 2 mit einem Trägerkörper 21, auf den ein Folienelement beispielsweise durch Heißprägen appliziert ist, welches von einem Teilbereich der Übertragungslage 12 der Transferfolie 1 gebildet ist.

Bei dem Sicherheitsdokument 2 handelt es sich um eine Banknote, einen Pass, einen Führerschein oder ein sonstiges, von einer Regierungsbehörde ausgestelltes Sicherheitsdokument. Im Weiteren ist es auch möglich, dass es sich bei dem Sicherheitsdokument 2 um ein Software-Zertifikat, eine Kreditkarte, usw. handelt.

Der Trägerkörper 21 besteht vorzugsweise aus einem Papier einer Dicke von 80 bis 200 $\mu$m. Es ist jedoch auch möglich, dass der Trägerkörper 21 aus einem polymeren Trägermaterial, insbesondere einer Polyesterfolie einer Dicke von 24 bis 51 $\mu$m oder aus einem mehrlagigen Kunststoff- und/oder Papiersubstrat besteht. Weiter ist es möglich, dass der Trägerkörper 21 mit ein oder mehreren Druckschichten bedruckt ist, wobei vorgesehen sein kann, dass innerhalb des von der Übertragungslage 12 gebildeten Folienelements ein oder mehrere Druckschichten vorgesehen sind und/oder dass diese Folienelement teilweise oder ganz mit einer oder mehreren Druckschichen überdruckt ist. Weiter ist es auch möglich, dass das von der Übertragungslage 12 gebildete Folienelement in eine durch Stanzen, Blindprägung oder mittels eines Wasserzeichens in den Trägerkörper 21 eingebrachte Vertiefung appliziert ist.

Weiter ist auch möglich dass dieses Folienelement zwischen zwei oder mehrere Polymerschichten einlaminiert wird.

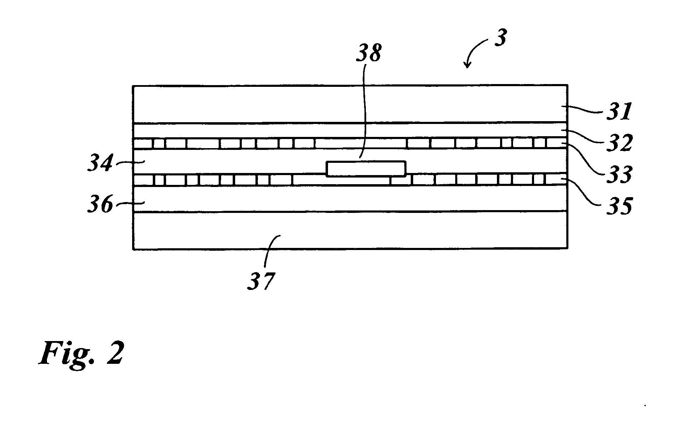

Fig. 2 zeigt eine nicht massstabsgetreue Schnittdarstellung eines Folienelements 3, welches mehrere Kunststofffolien 31, 34 und 37, optische aktive Schichten 32 und 36, elektrisch leitfähige Schichten 33 und 35 und eine elektrische Schaltung 37 aufweist.

Zur Herstellung des Folienelements 3 wird in einem ersten Schritt ein Mehrschrittkörper bestehend aus den elektrisch leitfähigen Schichten 33 und 35, der Kunststofffolie 34 und der elektrischen Schaltung 38 gefertigt.

Bei der Kunststofffolie 34 handelt es sich um eine Folie aus einem dielektrischen Kunststoffmaterial, beispielsweise um eine PET-Folie einer Schichtdicke von 24 bis 75 $\mu$m. Bei der Kunststofffolie 34 werden - wie oben bereits in Bezug auf die dielektrische Schicht 16 erläutert - die elektrisch leitfähigen Schichten 33 und 35 aufgebaut, die in Form einer ersten Leiterstruktur bzw. einer zweiten Leiterstruktur ausgeformt sind. Die Schichten 33 und 35 sind hierbei entsprechend den Schichten 15 und 17 nach Fig. 1a aufgebaut und bezüglich der Fertigung und Strukturierung dieser Schichten wird auf die Ausführungen zu den Schichten 33 und 35 verwiesen. Weiter wird in die Kunststoffschicht 34 während oder nach der Herstellung der elektrisch leitfähigen Schichten 33 und 35 eine Ausnehmung eingebracht, in die - während oder nach der Herstellung der elektrisch leitfähigen Schichten 33 und 35 - die elektrische Schaltung 37 beispielsweise mittels einer Haftkleberschicht appliziert und festgelegt wird.

Die optisch aktiven Schichten 32 und 36 können wie die optische aktive Schicht 14 nach Fig. 1a aufgebaut sein. Die optisch aktiven Schichten 32 und 36 werden als Übertragungslage einer Transferfolie entweder auf die Kunststofffolie 31 bzw. 37 oder auf die elektrisch leitfähige Schicht 33 bzw. 35 appliziert. Bei den Kunststofffolien 31 und 37 handelt es sich vorzugsweise um transparente PET- oder Polycarbonat-Folien einer Schichtdicke von 12 $\mu$m bis 100 $\mu$m.

Es ist auch möglich dass eine oder beide der elektrisch leitfähigen Schichten 33 und 35 auch eine optisch aktive Schicht darstellt, die beispielsweise ein optisch erkennbares Sicherheitselement bilden.

Die auf die oben beschriebene Art und Weise aufgebauten Teilkörper des Folienelements 3 werden in der in Fig. 2 gezeigten Reihenfolge übereinander angeordnet, einem Laminator zugeführt und durch Hitze/Druck zu dem Folienelement laminiert.

Eine mögliche Ausgestaltung der ersten und zweiten Leiterstrukturen der elektrisch leitfähigen Schichten 15 und 17 sowie 33 und 35 nach den Figuren Fig. 1a bzw. Fig. 2 wird nun anhand der Figuren Fig. 3a und Fig. 3b verdeutlicht.

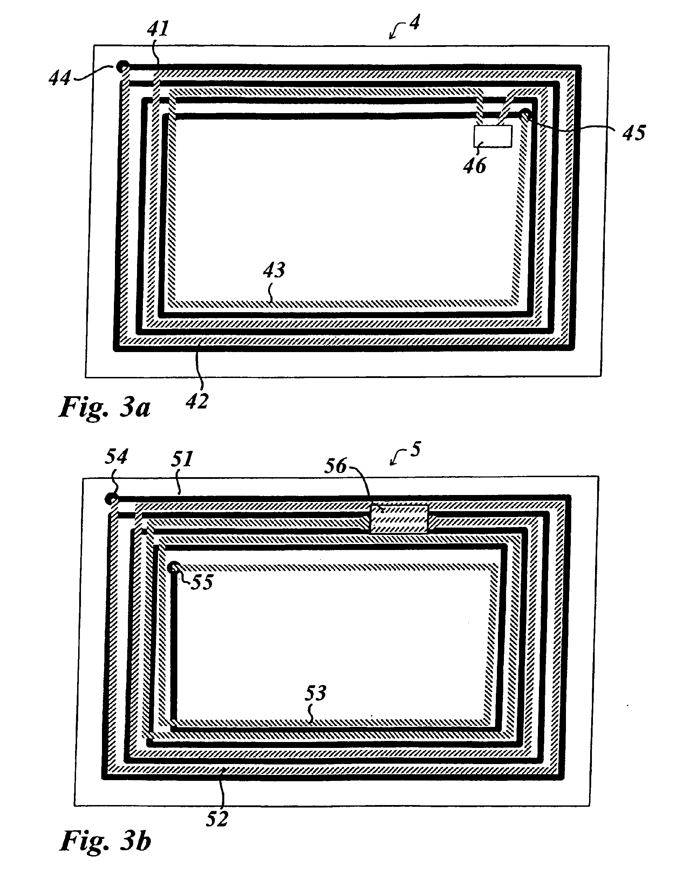

Fig. 3a zeigt eine Draufsicht auf ein Folienelement 4 und verdeutlicht die Ausformung der übereinander liegenden, durch eine dielektrische Schicht getrennten elektrisch leitfähigen Schichten. In einer ersten elektrisch leitfähigen Schicht sind zwei Leiterstrukturen, eine Leiterstruktur 42 und eine Leiterstruktur 43, ausgeformt. In einer zweiten elektrisch leitfähigen Schicht ist eine Leiterstruktur 41 ausgeformt. Weiter sind zwei Durchkontaktierungen 44 und 45 vorgesehen. Über die elektrisch leitfähige Durchkontaktierung 44 ist die Leiterstruktur 42 galvanisch mit der Leiterstruktur 41 und über die elektrisch leitfähige Durchkontaktierung die Leiterstruktur 43 mit der Leiterstruktur 41 galvanisch verbunden. Weiter ist in Fig. 3a eine elektrische Schaltung 46 gezeigt, die mit den von den Leiterstrukturen 41, 42 und 43 gebildeten Antennenstrukturen galvanisch verbunden ist. So ist eine erste Elektrode der elektrischen Schaltung 46 mit der Leiterstruktur 42 galvanisch verbunden. Die Leiterstruktur 42 wird von einer spulenförmigen Struktur gebildet, deren anderes Ende galvanisch über die Durchkontaktierung 44 mit der Leiterstruktur 41 verbunden ist. Die Leiterstruktur 41 wird ebenfalls von einer spulenförmigen Struktur gebildet, der anderes, nicht mit der Durchkontaktierung 44 verbundenes Ende über die Durchkontaktierung 45 mit der Leiterstruktur 43 verbunden ist. Die Leiterstruktur 43 wird ebenfalls von einer spulenförmigen, jedoch ledig eine Windung aufweisenden Struktur gebildet, deren anderes, nicht über die Durchkontaktierung 45 verbundenes Ende mit der anderen Elektrode der elektrischen Schaltung 46 verbunden ist.

Die geometrischen Abmessungen und die verwendeten Materialien können hierbei bei der Ausführungsform nach Fig. 3a beispielhaft wie folgt gewählt werden:

Als dielektrische Schicht wird eine Polyesterfolie einer Dicke von 75 $\mu$m verwendet, auf die beidseitig eine Kupferschicht einer Dicke von 12 $\mu$m aufgebracht ist, die entsprechend wie oben erläutert strukturiert ist. Der Außendurchmesser der von den Leiterstrukturen 41, 42 und 43 belegten Fläche belegt 76 x 27 mm. Die Leiterstrukturen 41, 42 und 43 weisen 3 ¼, 1 ¾ bzw. eine Windung auf, wie dies in Fig. 3a gezeigt ist. Die spulenförmigen Strukturen, die die Leiterstrukturen 41, 42 und 43 bilden, bestehen ebenfalls aus einer spulenförmig angeordneten Leiterbahn, die eine Breite von 0,45 mm und eine Beabstandung benachbarter Windungen der jeweiligen Leiterbahn von 0,5 mm aufweist. Die elektrische Schaltung 46 weist weiter bei einer Resonanzfrequenz von 14,5 MHz im unbelasteten Zustand eine Eingangskapazität von $C_{ic}$ = 14,5 pF auf. Bei der in Fig. 3a gezeigten Anordnung ergibt sich hierbei eine Kapazität $C_c$ der Antennenstruktur von 8,9 pF, eine Induktivität der Antennenstruktur L = 4,933 $\mu$H bei einer mittleren von der Antennenstruktur umschlossenen Fläche S = 1767 mm$^2$. Bei einer Schwellspannung für die Aktivierung der elektrischen Schaltung von $V_{IC}$ = 2 V besitzt die in Fig. 3a dargestellte Anordnung somit folgende Charakteristik:

Q = 26
H = 0,062 A/m
D = 280 mm$^2$

Im Weiteren ergibt sich bei der Anordnung nach Fig. 3a eine Kapazitätsdichte C' = K.$\varepsilon_o$ / $d_s$. Wird so die Anordnung der Leiterstrukturen 41 einerseits und 42 und 43 andererseits abweichend von der Darstellung nach Fig. 3a gewählt, so kann die hierdurch bewirkte Erhöhung der Kapazität $C_c$ der Antennenstruktur durch die hierdurch verursachte Vergrößerung der Kapazität $C_o$ wie folgt bestimmt werden:

$$C_o = O_f . C' . A$$

Der Überlappungsfaktor $O_f$ ergibt sich hierbei aus dem Prozentsatz, gemäß die Leiterbahnen der Leiterstrukturen 41, 42 und 43 in Überlappung zueinander angeordnet sind.

Auf Basis der obigen Ausführungen kann die in Fig. 3a gezeigte Anordnung auch an andere, zur Verfügung stehende Flächenabmessungen, Schichtdicken und/oder Resonanzfrequenzen angepasst werden.

In Fig. 3b ist eine an die Darstellung nach Fig. 3a angelehnte schematische Draufsicht auf ein Folienelement 5 gezeigt. In einer ersten elektrisch leitfähigen Schicht sind hier zwei Leiterstrukturen 52 und 53 ausgeformt und in einer zweiten, von dieser Schicht über eine dielektrische Schicht getrennte elektrisch leitfähige Schicht eine weitere Struktur 51 ausgeformt. Die Leiterstruktur 51 ist mit der Leiterstruktur 52 über eine Durchkontaktierung 54 und die Leiterstruktur 51 mit der Leiterstruktur 53 über eine Durchkontaktierung 55 verbunden. Wie in Fig. 3b dargestellt, werden hier beide in der ersten elektrisch leitfähigen Schicht ausgeformten Leiterstrukturen 52 und 53 von spulenförmigen Strukturen mit mehreren Windungen gebildet. Hierdurch wird es möglich, die elektrische Schaltung 56 auf besonders vorteilhafte Weise unter Vermeidung von Anschlusskapazität mit der von den Leiterstrukturen 51, 52 und 53 gebildeten Antennenstruktur galvanisch zu verbinden.

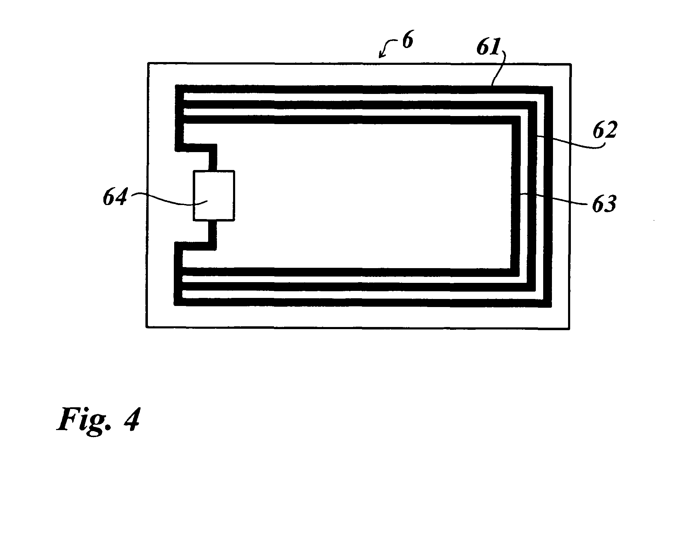

Fig. 4 zeigt eine ebenfalls an die Darstellung nach Fig. 3a angelehnte Darstellung einer Draufsicht auf ein nicht erfindungsgemäßes Folienelement 6. Das Folienelement 6 weist hierbei im Gegensatz zu den Folienelementen 4 und 5 lediglich eine elektrisch leitfähige Schicht auf, in der Leiterstrukturen 61, 62 und 63 ausgeformt sind. Das Folienelement 6 kann hierbei wie die Folienelemente 1, 12 und 3 nach den Figuren Fig. 1a und Fig. 1b ausgestaltet sein, mit dem Unterschied, dass eine der elektrisch leitfähigen Schichten 15 und 17 bzw. 33 und 35 nicht vorgesehen ist. Bezüglich des detaillierten Aufbau des Folienelements 6 wird so auf die vorhergehenden Ausführungen verwiesen.

Wie in Fig. 4 gezeigt, ist jeweils ein erstes Ende der Leiterstrukturen 61, 62 und 63 mit einer ersten Elektrode einer elektrischen Schaltung 64 und das zweite Ende der Leiterstruktur 61, 62 uns 63 mit der anderen Elektrode der elektrischen Schaltung 64 verbunden. Die Leiterstrukturen 61, 62 und 63 werden hierbei jeweils von einer schleifenförmigen Windung gebildet, die in derselben elektrisch leitfähigen Schicht ausgeformt sind und im Weiteren im wesentlichen parallel zueinander angeordnet sind.

Die Leiterstrukturen 61, Die Leiterstrukturen 61, 62 und 63 nach Fig. 4 bestehen beispielsweise jeweils aus einer aus Kupfer bestehenden Leiterbahn einer Breite von 1 mm und einer Dicke von 1 $\mu$m. Die Beabstandung zwischen den Leiterbahnen, die die Leiterstrukturen 61, 62 bzw. 63 bilden, beträgt 0,5 mm. Die Aussenabmessung der Antennenstruktur, die von der Aussenabmessung der Leiterstruktur 61 bestimmt wird, beträgt 40 mm x 30 mm.

Untersuchungen haben nun gezeigt, dass die nach dem in Fig. 4 verdeutlichten Prinzip aufgebauten Antennenstrukturen erhebliche Vorteile gegenüber vergleichbaren "Single Loop"-Antennen besitzen.

So ergibt sich für eine "Single Loop"-Antenne mit einer äusseren Abmessung von 40 mm x 30 mm, bestehend aus einer aus Kupfer bestehenden Leiterbahn einer Breite von 3 mm und einer Dicke von 1 $\mu$m eine Induktivität $L_T$ von:

$$L_T = L_o + M_+ + M_-.$$

Hierbei stellt $L_o$ die Selbst-Induktivität bzw. die der Leiterbahn inhärente Induktivität dar, $M_+$ die positive Induktivität, die sich aus der Interaktion zwischen benachbarten Leiterbahnen ergibt, und $M_-$ die Verringerung der Induktivität, die sich aus destruktiven, magnetischen Interaktionen zwischen benachbarten Leiterbahnen ergibt.

Im Falle einer "Single Loop"-Antenne mit den oben beschriebenen Dimensionen ergeben sich folgende Werte:

$L_o = 0,10$ $\mu$H; $M_+ = 0$; and $M_- = -0,014$, oder $L_T = 0,086$ $\mu$H.

Falls die Leiterbahn aus reinem Kupfer besteht, ergibt sich ein Antennenwiderstand $R_c$ von 0,73 Ohm.

Wird nun der Qualitätsfaktor nach dem weiter oben erläuterten Verfahren bestimmt, so ergibt sich ein Qualitätsfaktor $L_T/R_C$ für den Fall der oben erläuterten "Single Loop"-Antenne von ungefähr 0,118 $\mu$H/Ohm.

Wird nun die Antennenstruktur nach Fig. 4 mit den drei parallelen, konzentrischen Leiterstrukturen betrachtet, so ergibt sich für diese Anordnung eine Gesamtinduktivität der Antennenstruktur von $L_T$ von:

$$L_T^{-1} = (L_1 + M_+^{\cdot} + M_-^{\cdot})^{-1} + (L_2 + M_+^{\cdot\cdot} + M_-^{\cdot\cdot})^{-1} + (L_3 + M_+^{\cdot\cdot\cdot} + M_-^{\cdot\cdot\cdot})^{-1}$$

$L_1$, $L_2$ und $L_3$ bezeichnet hierbei die Selbst-Induktivität der Leiterstrukturen 61, 62 bzw. 63. Insgesamt ergibt sich so für den in Fig. 4 dargestellten Fall eine Gesamt-Induktivität $L_T = 0{,}114\ \mu H$.

Der Gesamtwiderstand der Antennenstruktur nach Fig. 4 berechnet sich aus der Parallel-Schaltung der Widerstände der Leiterstrukturen 61, 62 und 63, die jeweils einen Widerstand $R_1$, $R_2$ bzw. $R_3$ besitzen.

So gilt:

$$R_T^{-1} = R_1^{-1} + R_2^{-1} + R_3^{-1}$$

Für die Antennenstruktur nach Fig. 4 ergibt sich so ein Gesamt-Widerstand $R_T = 0{,}7$ Ohm und damit ein Qualitätsfaktor $L_T/R_C = 0{,}163\ \mu H/Ohm$.

Hierdurch ergibt sich, dass für eine vorgegebene Resonanzfrequenz der Qualitätsfaktor $Q_S$ der Antennenstrukturen durch die Verwendung von drei konzentrischen Leiterstrukturen, die wie in Fig. 4 gezeigt, in einer Parallel-Schaltung miteinander verschaltet sind und mit der elektrischen Schaltung 64 verbunden sind, verbessert werden kann. Umgekehrt kann so für die Erzielung desselben Qualitätsfaktors die Dicke der leitfähigen Schicht reduziert werden, in der die Antennenstrukturen ausgeformt sind. So kann bei dem Ausführungsbeispiel nach Fig. 4 die Dicke der leitfähigen Schicht auf eine Dicke $0{,}118/0{,}163 \times 1\ \mu m$, d.h. näherungsweise $0{,}75\ \mu m$, in Vergleich zu einer "Single Loop"-Antenne reduziert werden.

Weiter ist es auch möglich, dass die Leiterstrukturen 61, 62 und 63 nicht in ein und derselben elektrisch leitfähigen Schicht abgeformt sind, sondern dass diese Leiterstrukturen in unterschiedlichen, durch dielektrische Schichten voneinander getrennten Schichten vorgesehen sind und durch entsprechende Durchkontaktierungen entsprechend der Darstellung nach Fig: 4 miteinander gekoppelt sind. Für die Berechnung der Kapazität dieser Anordnung sowie die sich durch die Möglichkeit der Überlappung der Leiterstrukturen 61, 62 und 63 ergebenden Möglichkeiten wird auf die obigen Ausführungen verwiesen.

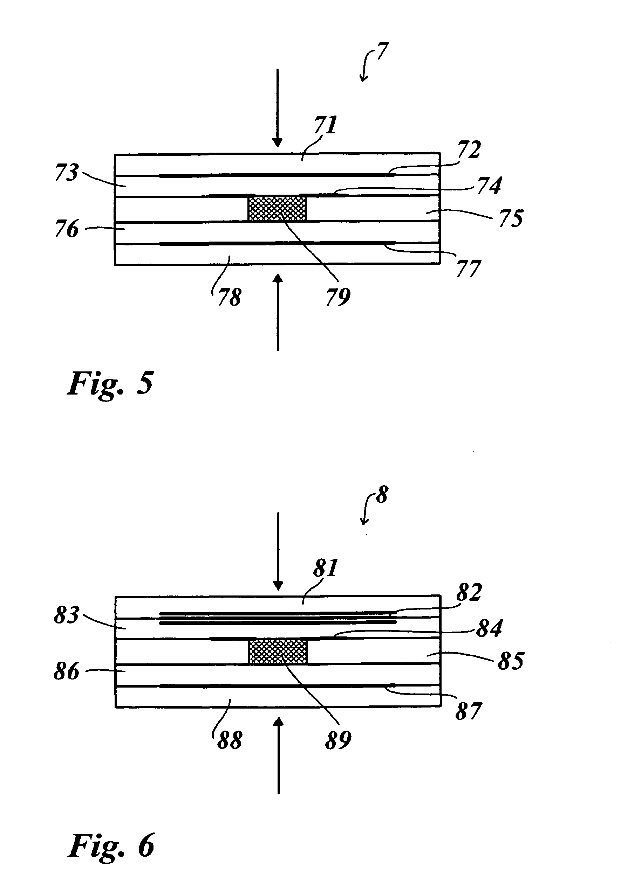

Anhand der Figuren Fig. 5 und Fig. 6 werden nun weitere Ausführungsbeispiele der Erfindung erläutert, bei denen in einem Folienelement erste Leiterstrukturen zur Einkopplung des Nahfeldes und zweite Leiterstrukturen zur Einkopplung des Fernfeldes vorgesehen sind.

Fig. 5 zeigt ein Folienelement 7 mit mehreren dielektrischen Schichten 71, 73, 75, 76 und 78, mehreren elektrisch leitfähigen Schichten 72, 74 und 77 und einer elektrischen Schaltung 79.

Bei den dielektrischen Schichten 71 und 78 handelt es sich um Kunststofffolien, vorzugsweise um Polycarbonat-Folien einer Dicke von 12 bis 100 $\mu m$.

Bei den dielektrischen Schichten 72, 75 und 76 handelt es sich vorzugsweise ebenfalls um Kunststofffolien. Es ist jedoch auch möglich, dass es sich bei diesen dielektrischen Schichten um Lackschichten handelt. Zur Herstellung des Folienelements 7 wird hierbei vorzugsweise zuerst ein Kernelement bestehend aus den Schichten 72 bis 77 gefertigt und dann in einem Laminierprozess zwischen die Schichten 71 und 78 einlaminiert, welche als Schutzschicht vor Umwelteinflüssen für das Kernelement dienen.

Es ist jedoch auch möglich, dass das Folienelement 7 durch Zusammenlaminieren von zwei oder mehr Laminierfolien, die jeweils eine oder mehrere der Schichten 71 bis 78 enthalten, hergestellt wird. So ist es beispielsweise möglich, dass eine erste Laminierfolie die Schichten 71, 72, 73 und 74 umfasst und eine zweite Laminierfolie die Schichten 75, 76, 77 und 78 umfasst. In diesem Fall handelt es sich bei den Schichten 73 und 76 vorzugsweise um Lackschichten. Weiter ist es auch möglich, dass eine oder mehrere Schichten 72 bis 77 mittels einer Transferfolie, beispielsweise einer Heißprägefolie, auf die Schichten 71 und/oder 78 appliziert werden und die sich so ergebenden Folienkörper sodann in einem Laminierprozess miteinander verbunden werden.

Bei den elektrisch leitfähigen Schichten 72, 74 und 77 handelt es sich um Schichten aus einem metallischen, elektrisch leitfähigen Material, beispielsweise Aluminium, Kupfer, Silber, Chrom, Gold oder einer Metalllegierung, aus einem elektrisch leitfähigen Polymer oder einem transparenten, elektrisch leitfähigen Material, beispielsweise ITO.

Die elektrisch leitfähigen Schichten 72, 74 und 77 sind hierbei in partiell ausgeformter Form zur Ausbildung einer ersten, zweiten bzw. dritten Leiterstruktur vorgesehen. Hierbei ist die von den elektrisch leitfähigen Schichten 72 und 77 bereitgestellte erste bzw. dritte Leiterstruktur jeweils in Form einer Dipol-Antenne ausgebildet. Die von der elektrisch leitfähigen Schicht 74 bereitgestellte Leiterstruktur ist in spulenförmiger oder streifenförmiger Formgebung ausgebildet, wobei die beiden Enden der beiden Leiterstrukturen jeweils mit einer zugeordneten Elektrode der elektrischen Schaltung 79 verbunden sind. So ergibt sich eine Antennenstruktur, die aus einer galvanisch mit der elektrischen Schaltung 79 verbundenen spulen- oder schleifenförmigen Leiterstruktur und zwei, von dieser Leiterstruktur galvanisch getrennten, parallel zu dieser Struktur angeordneten und diese Struktur beidseitig flankierenden Dipol-Antennenstrukturen besteht. Die erste und dritte Leiterstruktur sind so von Antennenstrukturen gebildet, die zur Einkopplung des Fernfelds des RF-Signals geeignet sind und die zweite Leiterstruktur wird von einer Antennenstruktur gebildet, die zur Einkopplung des Nahfeldes geeignet ist. Durch diese Anordnung gelingt es, die Komponenten des Fernfeldes sehr effektiv in die für das Nahfeld ausgelegte Antennenstruktur einzukoppeln und so die elektrische Schaltung aus einer Distanz von mehreren Metern zu aktivieren.

Die von den Schichten 72, 74 und 77 bereitgestellten Leiterstrukturen bestehen im wesentlichen aus Kupfer, Aluminium, Silber oder deren Legierungen und haben beispielsweise folgende Abmessungen:
Erste Leiterstruktur (Schicht 72): Schichtdicke 0,2 bis 3 $\mu$m, Ausformung in Form einer Dipol-Antenne einer typischen Länge von 160 mm, was einer halben Wellenlänge bei 900 MHz entspricht, und einer Breite von 3 bis 30 mm, vorzugsweise 10 mm.

Zweite Leiterstruktur (Schicht 74): Schichtdicke von weniger als 20 $\mu$m, Ausformung als spulenförmige Struktur mit einer Einzelwindung und einer Breite der Leiterbahn von 0,05 bis 5 mm, und mit einer Aussenabmessung von vorzugsweise 15 x 10 mm oder 40 x 30 mm.

Dritte Leiterstruktur (Schicht 77): Schichtdicke von weniger als 20 $\mu$m, bevorzugt von 0,2 bis 5 mm, Ausformung in Form einer Dipol-Antenne mit einer Länge von 15 bis 250 mm und einer Leiterbahnbreite von 2 bis 15 mm.

Die beiden Dipol-Antennen sind hierbei in einer Winkellage von 90° zueinander in der von den Schichten 72 und 77 aufgespannten Ebene angeordnet.

Fig. 6 zeigt ein Folienelement mit mehreren dielektrischen Schichten 81, 83, 85, 86 und 88, mehreren elektrisch leitfähigen Schichten 82, 84 und 87 und einer elektrischen Schaltung 89. Bezüglich der Ausgestaltung der Schichten 81, 83, 84, 85, 86, 87 und 88 wird auf die Ausführungen zu Fig. 5 bezüglich der Schichten 71, 73, 74, 75, 76, 77 bzw. 78 verwiesen. Hierbei ist es auch möglich, auf die Schicht 87 zu verzichten.

Bei der Schicht 82 handelt es sich um mehrere, übereinander applizierte elektrisch leitfähige Schichten, die beispielsweise jeweils aus einer Heißprägefolie ausgeprägt und übereinander appliziert sind. Jede dieser Schichten ist hierbei in Form einer Antenne ausgebildet und ist von der darunter liegenden, elektrisch leitfähigen Schicht jeweils durch eine sehr dünne dielektrische Schicht, die beispielsweise von der Kleberschicht der Transferlage gebildet wird, getrennt. Hierdurch wird erreicht, dass über der als spulenförmige oder schleifenförmige Antenne ausgeformten Schicht 84 zwei oder mehr, zueinander eng benachbarte Antennenstrukturen vorgesehen sind, die eine verbesserte Einkopplung des Nahfeldes erlauben. So wird durch die eng benachbarte Anordnung der Antennenstrukturen eine Erhöhung der Induktivität durch die Entstehung von Zwischen-Induktivitäten zusätzlich zur Selbst-Induktivität der Antennenstruktur erzielt. Die eng benachbart angeordneten Antennen der Schicht 82 sind hierbei jeweils in Form einer Dipol-Antenne ausgeformt und voneinander 2 bis 10 $\mu$m beabstandet.

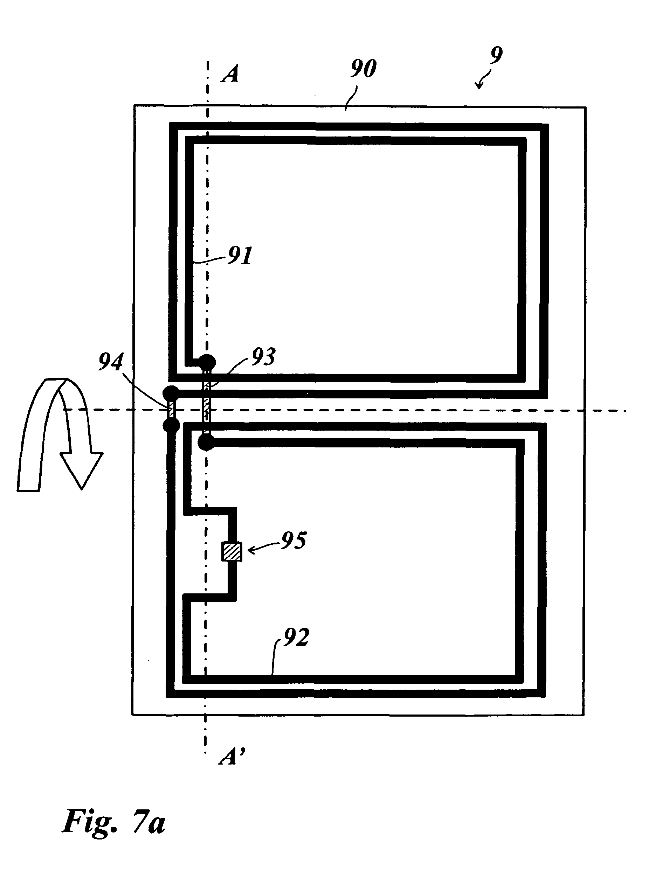

Anhand der Figuren Fig. 7a bis Fig. 7e wird ein weiteres Ausführungsbeispiel der Erfindung verdeutlicht.

Zur Erhöhung der Induktivität ist es hier vorgesehen, zwei oder mehr nebeneinander in einer Folienlage vorgesehenen Antennenstrukturen durch Faltung und anschließende Verklebung der gefalteten Folienlage in eine sich überdeckende Anordnung zu bringen.

Fig. 7a zeigt ein Folienelement 9 mit einem dielektrischen Trägersubstrat 90 und einer auf einer ersten Oberfläche des Trägersubstrats 90 vorgesehenen elektrisch leitfähigen Schicht, die in Form einer ersten, spulenförmigen Antennenstruktur 91 und einer zweiten, spulenförmigen Antennenstruktur 92 ausgeformt ist. Die zweite Antennenstruktur 92 besteht aus zwei, jeweils in spulenförmiger Form ausgeformten Leiterstrukturen, wobei - wie bereits anhand von Fig. 3a und Fig. 3b verdeutlicht - die eine Leiterstruktur mit einer ersten Elektrode der elektrischen Schaltung 95 und die zweite Leiterstruktur mit einer zweiten Elektrode der elektrischen Schaltung 95 verbunden sind. Im Weiteren sind in der dielektrischen Trägerschicht 90 Durchkontaktierungen vorgesehen, über welche die beiden Antennenstrukturen 91 und 92 über auf der gegenüberliegenden Seite des dielektrischen Trägersubstrats 90 angeordnete Verbindungselement 93 und 94 miteinander elektrisch leitend verbunden sind.

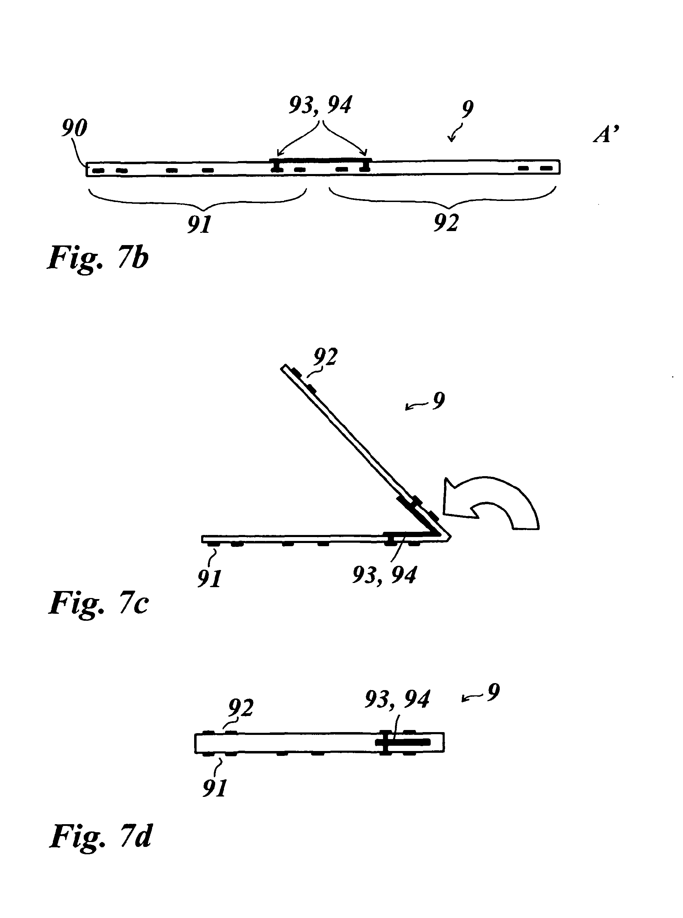

Fig. 7b verdeutlicht eine Schnittdarstellung eines Schnitts durch das Folienelement 9 entlang der Schnittlinie A/A' und zeigt ebenfalls die beiden Antennenstrukturen 91 und 92 sowie die Verbindungselemente 93 und 94, die die beiden Antennenstrukturen 91 und 92 über Durchkontaktierungen elektrisch leitfähig verbinden.

Nach Fertigung des in Fig. 7a und Fig. 7b verdeutlichten Folienelements 9 wird das Folienelement 9 entlang der in Fig. 7a durch Strichpunktierung angedeuteten Linie gefaltet, wie dies auch in Fig. 7c verdeutlicht wird. Nach oder während der Faltung werden sodann die beiden aufeinander liegenden Oberflächen des dielektrischen Trägersubstrats miteinander durch Verklebung mittels einer zusätzlich vorgesehenen Kleberschicht oder durch partielles oder vollflächiges Aufschmelzen der aufeinander liegenden Schichten miteinander verbunden.

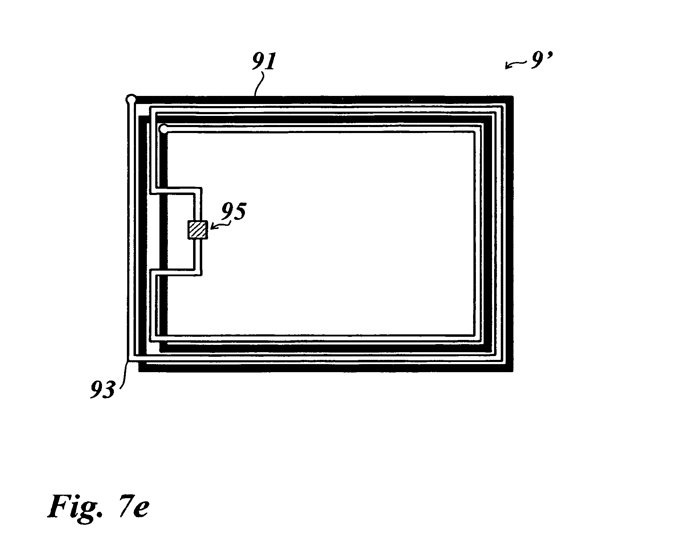

So ergibt sich dann das in Fig. 7d und Fig. 7e verdeutlichte Folienelement 9', bei dem die Antennenstrukturen 92 und 91 an den beiden Aussenseiten eines dielektrischen Kerns angeordnet sind, welcher durch die gefaltete und verklebte Trägerschicht 90 bereitgestellt wird. Auf diese Art und Weise wird eine besonders kostengünstige und effektive Fertigung eines erfindungsgemässen Folienelements ermöglicht.

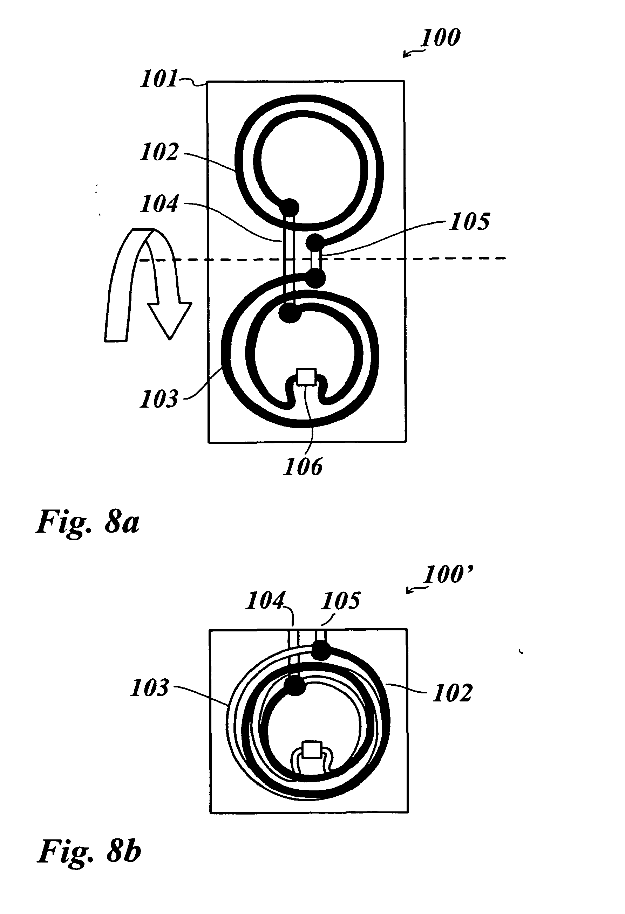

Fig. 8a und Fig. 8b verdeutlichen nun ein weiteres Ausführungsbeispiel der Erfindung, welches dem anhand der Figuren Fig. 7a bis Fig. 7e verdeutlichten Prinzip folgt.

Fig. 8a zeigt ein Folienelement 100 mit einer dielektrischen Trägerfolie und einer auf der dielektrischen Trägerfolie vorgesehenen elektrisch leitfähigen Schicht, welche in Form der in Fig. 8a dargestellten Antennenstrukturen 102 und 106 ausgeformt ist. Die Antennenstruktur 103 ist hier mit der elektrischen Schaltung 106 verbunden. Auch hier sind Durchkontaktierungen vorgesehen, über welche die Antennenstrukturen 102 und 103 über elektrische Verbindungselemente 104 und 105 miteinander elektrisch leitfähig verbunden sind. Nach Herstellung des Folienelements 100, beispielsweise durch vollflächige Metallisierung einer Polyesterfolie mittels Sputtern oder Vakuumbedampfen, der Strukturierung der Metallschicht mittels Positiv-/ Negativ-Ätzen, der Herstellung der Durchkontaktierungen und der Herstellung der leitfähigen Verbindungselemente 104 und 105 beispielsweise durch Aufdrucken eines leitfähigen Klebers in der Fig. 8a gezeigten Formgebung, wird das Folienelement 100 entlang der in Fig. 8a angedeuteten Linie gefaltet und die aufeinander aufliegenden Oberflächen des Folienelements 100 miteinander verklebt. Diese Verklebung kann durch leitfähigen Klebers realisiert werden, der beispielsweise auch für die Herstellung der Verbindungselemente 104 und 105 eingesetzt wird. So ergibt sich das in Fig. 8b gezeigte Folienelement 100' mit den beiden miteinander galvanisch verbundenen und übereinander angeordneten Antennenstrukturen 102 und 103.

## Patentansprüche

1. Mehrschichtiges Folienelement (1, 12, 3, 4, 5, 6) mit mindestens einer flexiblen dielektrischen Schicht (16, 34) und mit mehreren elektrisch leitfähigen Schichten (15, 17, 33, 35), jeweils bestehend aus einem elektrisch leitfähigen Material, wobei die Schichtdicke der elektrisch leitfähigen Schichten jeweils weniger als 20 $\mu$m beträgt, wobei das mehrschichtige Folienelement eine Laminierfolie oder eine Transferfolie ist, wobei die elektrisch leitfähigen Schichten musterförmig zur Bildung von zwei oder mehr Leiterstrukturen (41, 42, 43, 51, 52, 53, 61, 62, 63) ausgeformt sind, die miteinander zu einer Antennenstruktur gekoppelt sind, welche galvanisch mit einer elektrischen Schaltung (19, 38, 46, 56, 64) verbunden ist, wobei das Folienelement eine optisch aktive Schicht (14, 32) aufweist, und wobei die optisch aktive Schicht (14, 32) derart in dem Folienelement angeordnet ist, dass sie die zwei oder mehr Leiterstrukturen zumindest teilweise überdeckt, und die elektrisch leitfähigen Schichten als Reflexionsschicht mit der optisch aktiven Schicht zusammenwirken,

2. Folienelement (1, 12, 3, 4, 5) nach Anspruch 1,
   **dadurch gekennzeichnet ,**
   **dass** die zwei oder mehr Leiterstrukturen (41, 42, 43, 51, 52, 53) in zwei oder mehr unterschiedlichen leitfähigen Schichten ausgeformt sind.

3. Folienelement (1, 12, 3, 4, 5) nach einem der vorhergehenden Ansprüche,
   **dadurch gekennzeichnet ,**
   **dass** eine erste der Leiterstrukturen in einer ersten der leitfähigen Schichten ausgeformt ist und dass eine zweite der Leiterstrukturen in einer zweiten der leitfähigen Schichten ausgeformt ist, und dass die dielektrische Schicht (16, 34) zwischen der ersten und der zweiten leitfähigen Schicht (5, 32; 17, 35) angeordnet ist

4. Folienelement (4, 5) nach Anspruch 3,
   **dadurch gekennzeichnet ,**
   **dass** eine dritte Leiterstruktur (43, 53) in der ersten leitfähigen Schicht ausgeformt ist und dass eine erste Elektrode der elektrischen Schaltung (46, 56) mit der ersten Leiterstruktur (42, 52) und eine zweite Elektrode der elektrischen Schaltung (46, 56) mit der dritten Leiterstruktur (43, 53) galvanisch verbunden ist.

5. Folienelement (4, 5) nach Anspruch 4,
   **dadurch gekennzeichnet ,**
   **dass** die erste, zweite und dritte Leiterstruktur (42, 41, 43; 52, 51, 53) jeweils von einer spulenförmigen Struktur gebildet ist, dass die erste Leiterstruktur (42, 52) mit der zweiten Leiterstruktur (41, 51) und die zweite Leiterstruktur (41, 51) mit der dritten Leiterstruktur (43, 53) jeweils galvanisch über eine Durchkontaktierung und/oder induktiv/ kapazitiv gekoppelt sind.

6. Folienelement (4, 5) nach Anspruch 5,
   **dadurch gekennzeichnet ,**

**dass** ein Ende der ersten Leiterstruktur (42, 52) galvanisch über eine Durchkontaktierung (44, 54) mit einem Ende der zweiten Leiterstruktur (41, 51) und ein Ende der dritten Leiterstruktur (43, 53) galvanisch über eine Durchkontaktierung (45, 55) mit dem anderen Ende der zweiten Leiterstruktur (41, 51) verbunden ist.

7.  Folienelement (4, 5) nach einem der Ansprüche 3 bis 6,
    **dadurch gekennzeichnet ,**
    **dass** die erste und die zweite Leiterstruktur (41, 42, 51, 52) jeweils von einer spulenförmigen Struktur umfassend eine spulenfönnig angeordnete Leiterbahn gebildet sind, wobei die Windungen der Leiterbahn jeder der spulenförmigen Strukturen weniger als 0,5 mm voneinander beabstandet sind, bevorzugt 0,05 mm bis 0,5 mm voneinander beabstandet sind und/oder die Leiterbahn der spulenförmigen Strukturen jeweils eine Breite von weniger als 5 mm, bevorzugt zwischen 0,05 mm und 5 mm aufinreisen.

8.  Folienelement nach einem der vorhergehenden Ansprüche,
    **dadurch gekennzeichnet ,**
    **dass** mindestens eine der elektrisch leitfähigen Schichten von einer Schicht einer Übertragungslage einer Transferfolie gebildet sind, die mittels einer Kleberschicht mit der dielektrischen Schicht verbunden ist.

9.  Folienelement (1, 12, 3) nach einem der vorhergehenden Ansprüche,
    **dadurch gekennzeichnet ,**
    **dass** das Folienelement als optisch aktive Schicht (14, 32) eine Schicht mit einem mikroskopischen oder makroskopischen Oberflächenrelief, insbesondere einem beugungsoptisch wirksamen Oberflächenrelief oder einem Oberflächenrelief in Form von Linsenstrulcturen, Mattstrukturen oder Blazegittem, eine Dünnfilmschicht, eine Flüssigkristallschicht oder eine Schicht mit optisch aktiven Pigmenten, insbesondere Effektpigmenten, UV-oder IR-aktivierbaren Pigmenten aufweist.

10. Folienelement nach Anspruch 9,
    **dadurch gekennzeichnet,**
    **dass** in der optisch aktiven Schicht eine optisch auslesbare Codierung enthalten ist.

11. Folienelement (1) nach einem der vorhergehenden Ansprüche,
    **dadurch gekennzeichnet,**
    **dass** das Folienelement als Transferfolie, insbesondere als Heißprägefolie, mit einer Trägerfolie (10) und einer hiervon durch eine Ablöseschicht (11) getrennten Übertragungslage (12) ausgebildet ist und dass die dielektrische Schicht (16) und die elektrisch leitfähige Schicht bzw. leitfähigen Schichten (15, 17) Teil der Übertragungslage sind,

12. Folienelement nach einem der vorhergehenden Ansprüche,
    **dadurch gekennzeichnet,**
    **dass** die dielektrische Schicht eine Schichtdicke von weniger als 3 $\mu$m besitzt.

13. Folienelement nach einem der vorhergehenden Ansprüche,
    **dadurch gekennzeichnet ,**
    **dass** das Folienelement eine Schichtdicke von weniger als 20 $\mu$m besitzt.

14. Folienelement (3) nach einem der Ansprüche 1 bis 10,
    **dadurch gekennzeichnet,**
    **dass** das Folienelement als Laminierfolie ausgebildet ist und die dielektrische Schicht (34) eine Schichtdicke von 12 bis 42 $\mu$m besitzt.

**Claims**

1.  Multi-layer film element (1, 12, 3, 4, 5, 6) with at least one flexible dielectric layer (16, 34) and with several electrically conductive layers (15, 17, 33, 35), each consisting of an electrically-conductive material, in which the electrically conductive layers are each less than 20 $\mu$m, in which the multi-layer film element is a laminate film or a transfer film, in which the electrically-conductive layers are formed in a pattern to form two or more conductive patterns (41, 42, 43, 51, 52, 53, 61, 62, 63), which are coupled together to an antenna structure, which is connected galvanically with an electrical switch (19, 38, 46, 56, 64), in which the film element has an optically active layer (14, 32), and in which the optically active layer (14, 32) is arranged in such a way in the film element that it at least partly covers two or more conductive patterns, and electrically-conductive layers work together as a reflecting layer with the optically active layer.

2. Film element (1, 12, 3, 4, 5) in accordance with claim 1, marked in such a way that two or more conductive patterns (41, 42, 43, 51, 52, 53) are formed in two or more different conductive layers.

3. Film element (1, 12, 3, 4, 5) in accordance with one of the preceding claims, marked in such a way that a first of these conductive patterns is formed in a first of the conductive layers and that a second of the conductive patterns is formed in a second of the conductive layers, and that the dielectric layer (16, 34) is arranged between the first and the second conductive layer (5, 32; 17, 35).

4. Film element (4, 5) in accordance with claim 3, marked in such a way that a third conductive pattern (43, 53) is formed in the first conductive layer and that a first electrode of the electrical switch (46, 56) is galvanically connected with the first conductive pattern (42, 52) and a second electrode of the electrical switch (46, 56) is galvanically connected with the third conductive pattern (43,53).

5. Film element (4, 5) in accordance with claim 4, marked in such a way that the first, second and third conductive patterns (42, 41, 43; 52, 51, 53) are each formed by a coil-shaped structure, that the first conductive pattern (42, 52) with the second conductive pattern (41, 51) and the second conductive pattern (41, 51) with the third conductive pattern (43, 53) are each galvanically coupled via a plated-through hole and/or inductively/capacitatively.

6. Film element (4, 5) in accordance with claim 5, marked in such a way that an end of the first conductive pattern (42, 52) is galvanically connected with an end of the second conductive pattern (41, 51) via a plated-through hole (44, 54); and an end of the third conductive pattern (43, 53) is galvanically connected with the other end of the second conductive pattern (41, 51) via a plated-through hole (45, 55).

7. Film element (4, 5) in accordance with claims 3 to 6, marked in such a way that the first and the second conductive pattern (41, 42, 51, 52) are each formed by a coil-shaped structure encompassing a conductive path arranged in a coil shape, in which the windings of the conductive path of each of the coil-shaped structures are less than 0.5 mm distant from one another, preferably 0.05 mm to 0.5 mm distant from one another and/or the conductive path of the coil-shaped structures each have a width of less than 5 mm, preferably between 0.05 mm and 5 mm.

8. Film element in accordance with one of the preceding claims, marked in such a way that at least one of the electrically conductive layers is formed by a layer of a transfer layer of a transfer film, which is connected with the dielectric layer via an adhesive layer.

9. Film element (1, 12, 3) in accordance with one of the preceding claims, marked in such a way that the film element as an optically active layer (14, 32) has a layer with a microscopic or macroscopic surface relief, especially an effective diffraction-optical surface relief or a surface relief in the form of lens structures, matt structures or blazed gratings, a thin film layer, a liquid crystal layer or a layer with optically active pigments, especially effect pigments, or pigments that can be activated via UV or IR.

10. Film element in accordance with claim 9, marked in such a way that the optically active layer contains an optically readable coding.

11. Film element (1) in accordance with one of the preceding claims, marked in such a way that the film element as transfer film, in particular as a hot-stamped film, is formed with a carrier film (10) and a transfer layer (12) separated from this with a release layer (11) and that the dielectric layer (16) and the electrically-conductive layer or conductive layers (15, 17) are part of the transfer layer.

12. Film element in accordance with one of the preceding claims, marked in such a way that the dielectric layer has a layer thickness of less than 3 $\mu$m.

13. Film element in accordance with one of the preceding claims, marked in such a way that the film element has a layer thickness of less than 20 $\mu$m.

14. Film element (3) in accordance with one of claims 1 to 10, marked in such a way that the film element is formed as a laminate film and the dielectric layer (34) has a layer thickness of 12 to 42 $\mu$m.

**Revendications**

1. Elément en feuille multicouches (1, 12, 3, 4, 5, 6) avec au moins une couche diélectrique flexible (16, 34) et avec plusieurs couches électroconductrices (15, 17, 33, 35), se composant respectivement d'un matériau électroconducteur, l'épaisseur de couche des couches électroconductrices étant respectivement inférieure à 20 μm, l'élément en feuille multicouches étant un film de laminage ou un film de transfert, les couches électroconductrices se présentant sous la forme de motifs pour la formation de deux ou davantage de structures conductrices (41, 42, 43, 51, 52, 53, 61, 62, 63) lesquelles sont couplées ensemble pour former une structure à antennes, laquelle est reliée de manière galvanique à un circuit électrique (19, 38, 46, 56, 64), l'élément en feuille présentant une couche active optiquement (14, 32), et la couche active optiquement (14, 32) étant disposée dans l'élément en feuille de manière à ce qu'elle recouvre au moins partiellement les deux ou davantage de structures conductrices, et les couches électroconductrices coopérant en tant que couche de réflexion avec la couche active optiquement.

2. Elément en feuille (1, 12, 3, 4, 5) selon la revendication 1, **caractérisé en ce que** les deux ou davantage de structures conductrices (41, 42, 43, 51, 52, 53) sont réalisées sous la forme de deux ou davantage de couches conductrices différentes.

3. Elément en feuille (1, 12, 3, 4, 5) selon l'une des revendications précédentes, **caractérisé en ce qu'**une première des structures conductrices est formée dans une première des couches conductrices et **en ce qu'**une deuxième des structures conductrices est formée dans une deuxième des couches conductrices, et **en ce que** la couche diélectrique (16, 34) est disposée entre la première et la deuxième couche conductrice (5, 32, 17, 35).

4. Elément en feuille (4, 5) selon la revendication 3, **caractérisé en ce qu'**une troisième structure conductrice (43, 53) est formée dans la première couche conductrice et **en ce qu'**une première électrode du circuit électrique (46, 56) est reliée de manière galvanique à la première structure conductrice (42, 52) et **en ce qu'**une deuxième électrode du circuit électrique (46, 56) est reliée de manière galvanique à la troisième structure conductrice (43, 53).

5. Elément en feuille (4, 5) selon la revendication 4, **caractérisé en ce que** les première, deuxième et troisième structures conductrices (42, 41, 43 ; 52, 51, 53) sont respectivement formées par une structure en forme de bobine, **en ce que** la première structure conductrice (42, 52) est couplée à la deuxième structure conductrice (41, 51) et la deuxième structure conductrice (41, 51) à la troisième structure conductrice (43, 53) respectivement de manière galvanique via une connexion transversale et/ou de manière inductive/capacitive.

6. Elément en feuille (4, 5) selon la revendication 5, **caractérisé en ce qu'**une extrémité de la première structure conductrice (42, 52) est reliée de manière galvanique via une connexion transversale (44, 54) à une extrémité de la deuxième structure conductrice (41, 51) et **en ce qu'**une extrémité de la troisième structure conductrice (43, 53) est reliée de manière galvanique via une connexion transversale (45, 55) à l'autre extrémité de la deuxième structure conductrice (41, 51).

7. Elément en feuille (4, 5) selon l'une des revendications 3 à 6, **caractérisé en ce que** les première et deuxième structures conductrices (41, 42, 51, 52) sont respectivement formées par une structure en forme de bobine comprenant une piste conductrice disposée en forme de bobine, les enroulements de la piste conductrice de chacune des structures en forme de bobine étant espacés les uns des autres de moins de 0,5 mm, de préférence espacés les uns des autres de 0,05 mm à 0,5 mm et/ou la piste conductrice des structures en forme de bobine présentant respectivement une largeur de moins de 5 mm, de préférence comprise entre 0,05 mm et 5 mm.

8. Elément en feuille selon l'une des revendications précédentes, **caractérisé en ce qu'**au moins l'une des couches électroconductrices est formée par une couche d'une couche de transfert d'un film de transfert, laquelle est reliée à l'aide d'une couche adhésive à la couche diélectrique.

9. Elément en feuille (1, 12, 3) selon l'une des revendications précédentes, **caractérisé en ce que** l'élément en feuille présente, en tant que couche active optiquement (14, 32), une couche avec un relief de surface microscopique ou macroscopique, en particulier un relief de surface à effet de diffraction optique ou un relief de surface sous forme de structures à lentilles, structures mattes ou réseaux blazés, une couche de pellicule mince, une couche de cristaux liquides ou bien une couche avec des pigments actifs optiquement, en particulier des pigments à effet, des pigments activables par UV ou IR.

10. Elément en feuille selon la revendication 9,
**caractérisé en ce que** dans la couche active optiquement se trouve un codage lisible de manière optique.

11. Elément en feuille (1) selon l'une des revendications précédentes,
**caractérisé en ce que** l'élément en feuille est réalisé en tant que film de transfert, en particulier en tant que film d'estampage à chaud, avec un film de support (10) et une couche de transfert (12) séparée de celui-ci par une couche de libération (11), et **en ce que** la couche diélectrique (16) et la couche électroconductrice et/ou les couches électroconductrices (15, 17) font partie de la couche de transfert.

12. Elément en feuille selon l'une des revendications précédentes,
**caractérisé en ce que** la couche diélectrique présente une épaisseur de couche de moins de 3 $\mu$m.

13. Elément en feuille selon l'une des revendications précédentes,
**caractérisé en ce que** l'élément en feuille présente une épaisseur de couche de moins de 20 $\mu$m.

14. Elément en feuille (3) selon l'une des revendications 1 à 10,
**caractérisé en ce que** l'élément en feuille est réalisé en tant que film laminé et **en ce que** la couche diélectrique (34) présente une épaisseur de couche de 12 à 42 $\mu$m.

**Fig. 1a**

**Fig. 1b**

**Fig. 2**

*Fig. 3a*

*Fig. 3b*

*Fig. 4*

**Fig. 5**

**Fig. 6**

**Fig. 7a**

**Fig. 7b**

**Fig. 7c**

**Fig. 7d**

**Fig. 7e**

**Fig. 8a**

**Fig. 8b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19601358 C2
- EP 1179811 A1
- US 20060053286 A1